# EUROPÄISCHE PATENTSCHRIFT

(11) **EP 2 192 064 B1**
(45) Veröffentlichungstag und Bekanntmachung des Hinweises auf die Patenterteilung: **29.02.2012**
(21) Anmeldenummer: 09014110.2
(22) Anmeldetag: 11.11.2009
(51) Int. Cl.: B65G 53/52, B28D 1/04, B28D 7/02, B65G 53/54, B65G 53/42, B28D 1/14

(54) **Vorrichtung zum Materialtransport**
Device for material transport
Dispositif de transport de matériel

(30) Priorität: 11.11.2008 DE 102008056800
(43) Veröffentlichungstag der Anmeldung: 02.06.2010
(73) Patentinhaber: Zieger, Erwin, 63931 Kirchzell (DE)
(72) Erfinder: Zieger, Erwin, 63931 Kirchzell (DE)
(74) Vertreter: Pöhner, Wilfried Anton

(56) Entgegenhaltungen:
- EP-A1- 1 671 769
- DE-B- 1 284 895

## Beschreibung

Die Erfindung betrifft eine Vorrichtung zum Materialtransport mit zumindest einem Leitungsrohr und mit zumindest einem Leitungsrohrelement, durch das der Materialtransport vorzunehmen ist und mit zumindest einer Rotationsvorrichtung, die mit dem Leitungsrohrelement so verbunden ist, dass das Leitungsrohrelement mit Hilfe der Rotationsvorrichtung um eine Längsachse drehbar ist und ein drehbares Leitungsrohrelement am Kopf eines Leitungsrohres einen Bohrkopf aufweist.

Bekannt sind Fahrzeuge mit einer Sammeleinheit und einer Saugeinheit und einem flexiblen Saugrüssel, der zum Aufsaugen beispielsweise von Erdaushub oder Schüttgütern eingesetzt wird. Nachteilig bei den bekannten Systemen des Stands der Technik ist es, dass es bei komplexeren Materialien, beispielsweise verhärtetem Erdreich, Steinschutt unterschiedlicher Körnung, Sand oder Lehm zu Problemen beim Saugen, insbesondere beim Aufnehmen des Materials sowie beim Materialtransport kommen kann.

Das Dokument EP 1 671 769 A1 offenbart eine Vorrichtung zum Materialtransport gemäß dem Oberbegriff des Anspruchs 1.

Auf aktuellem Stand der Technik beschreibt die Patentanmeldung EP 1 671 769 A1 einen hohlen und doppelwandigen Bohrer für Felsen und Mauern, durch dessen äußeren Hohlraum Wasser in das Bohrloch gedrückt wird, dort den Bohrer kühlt, sich mit den gelösten Gesteinsbrocken vermischt und durch den inneren Hohlraum des Bohrers wieder neraus gespült wird.

Eine wesentliche Einschränkung dieses Verfahrens ist die Durchnässung des an die abtransportierten Bereiche angrenzenden Materials. Wenn also zum Beispiel Erdreich, verhärtetes Erdreich, Lehm oder Sand neben der Kellerwand eines Gebäudes aufgenommen und abtransportiert werden soll, ist das Verfahren und die Vorrichtung gemäß der EP 1 671 769 A1 völlig ungeeignet. In der Praxis ist das abzutragende Material fast immer so ungleichmäßig, dass häufig größere Bereiche als Brocken schlagartig wegbrechen. Dadurch entstehen größere Hohlräume und angrenzende Risse, die schnell mit nachfließendem Wasser gefüllt werden und nicht mehr vollständig abgesaugt werden können. Von dort aus breitet sich das Wasser weiter aus, was z. B. der Trockenlegung einer Kellerwand vollkommen entgegen steht.

*Zum Aufnehmen von staubförmigen und körnigen Schüttgütern wie Kohlenstaub und Getreide beschreibt die* DE 1 284 895 *eine Rohrleitung in der eine Strömung um die Längsachse des Rohres rotiert und dadurch Wirbel bildet, die den Staub oder die Körner in der Strömung halten,* so *dass sie auch über größere Entfernungen mitgerissen werden und sich nicht irgendwo innerhalb des Rohres ablagern.*

*Um dem Staub oder den Kömem bereits bei der Aufnahme einen Drall zu verleihen, sie also nicht nur in Längsrichtung des Rohres zu bewegen sondern auch tangential oder parallel zu einer Tangente, schlägt die* DE 1 284 895 *vor, an einem um die Längsachse des Rohres drehbaren Anfangsstück schaufelartige Flächen anzubringen, die in Längsrichtung des Rohres ausgerichtet sind. Diese Flächen werden zuerst in das zu fördernde Material hineingedrückt und dann verschwenkt werden.*

*Der entscheidende Vorzug dieses Prinzips ist, dass ein Materialtransport noch bei einer Geschwindigkeit des Luftstromes möglich ist, die niedrig ist, dass eine nur in Längsrichtung verlaufende Luftströmung das Material nicht mehr mitnehmen könnte.*

*Nachteilig ist, dass das Prinzip auf sehr homogene Materialien wie Kohlenstaub und Getreide mit jeweils recht geringen Unterschieden in den Korngrößen beschränkt ist. Eine weitere Einschränkung ist, dass beim Ansaugen der Partikel nur deren Masse überwunden wird, dass die Partikel also nur einer Fläche abgehoben werden können. Denn wenn die Geschwindigkeit der Luftströmung* so *weit gesteigert wird, dass sie auch noch Partikel aus einer Verklemmung und*/*oder Verklebung heraus reißen könnte, hätte eine derartige Luftströmung innerhalb des Rohres kaum mehr einen Drall, würde also nicht nach dem Prinzip des Schutzrechtes* DE 1 284 895 *wirken.*

Aufgabe der Erfindung ist es, eine einfache und sichere Vorrichtung zum *Aufnehmen und zum* Transport insbesondere von *Erdreich oder verhärtetem Erdreich oder Sand bereit zu stellen, die solches und ähnliches, feuchtigkeitsabsorbierendes und inhomogenes Material auch dann aufnehmen kann, wenn es miteinander verkeilt und*/*oder verklebt ist und die im einfachsten Fall mit einer einfachen Rohrleitung als Transportweg auskommt.*

Die Aufgabe wird gelöst, indem eine Sauglufteinheit vorhanden ist und in den Leitungsrohren und Leitungsrohrelementen ein Luftstrom mit einem Saugdruck erzeugbar ist und durch den Bohrkopf ein Auflockern und ein erster Aufsaugvorgang von Erdreich oder verhärtetem Erdreich oder Sand erleichterbar ist.

Die Sauglufteinheit ermöglicht die Transportarbeit durch Ansaugen von Material. In der einfachsten Ausführungsform wird der Materialfluß im Rohr also nur durch die Sauglufteinheit in Gang gebracht und aufrecht erhalten.

Ein wesentliches Merkmal der Erfindung ist, dass ein drehbares Leitungsrohrelement am Anfang des Leitungsrohres eine vereinfachte Loslösung und Aufsaugung von Material ermöglicht, indem es einen Bohrkopf aufweist, mit dessen Hilfe insbesondere der Materialtransport und/oder ein Bohrvorgang unterstützt werden.

Dazu wird eine Antriebseinheit an die Kopfeinheit montiert. Diese kann bei Bedarf das Saugrohr mittels einer Dreheinheit antreiben. Dies kann vorteilhaft eingesetzt werden, um beispielsweise größere Steine oder verhärtetes Erdreich zu lösen. Das Leitungsrohrelement kann mittels der Antriebseinheit im Uhrzeigersinn oder entgegen dem Uhrzeigersinn gedreht werden, um Material zu lösen.

Vorteilhaft ist es, wenn das drehbare Leitungsrohrelement am Kopf des Leitungsrohrs als Bohrkopf eine Bohrkrone, insbesondere einen Diamantbohrer und/oder Krallen aufweist, und/oder mit Schraublamellen im Sinne eines schraubenartig umlaufenden Außenstegs ausgestattet ist. Je nach Bodenbeschaffenheit können an dem Kopf weitere Hilfsmittel wie Diamantbohrer, Krallen etc. befestigt sein.

In einer Ausführungsvariante ermöglicht es eine erfindungsgemäße Vorrichtung bei der Transportarbeit, den Materialfluss derart zu unterstützen, dass sich keine Ansammlungen von Material auch in unzugänglichen und stark gekrümmten Bereichen des Leitungsrohrs bilden können. Stattdessen wird das Material durch eine Drehung eines Leitungsrohrelementes direkt wieder in den Luftstrom hineingebracht und abtransportiert. Auf einfache Weise ist somit der Materialtransport dadurch zu unterstützen, dass das drehbare Leitungsrohrelement unabhängig von den übrigen Leitungselementen drehbar ist. Somit ist eine Vorrichtung zum Fördern und/oder Auflockern von zu transportierendem Material, insbesondere Erdreich, bereitgestellt mit einem rohrförmigen Mittel zum Saugen, das sehr flexibel einsetzbar ist. Besonders die schwierige Ansaugung von Sand ist erleichtert, der sich häufig im Leitungsrohr absetzt und durch die erfindungsgemäße Vorrichtung leicht weiter transportierbar wird.

Dazu kann eine Antriebseinheit auch an einen flexiblen Schlauch montiert werden. Vorteilhaft ist eine weitere Variante, bei der im Verlauf der Rohrleitung mehrere Leitungsrohrelemente vorhanden sind, die jeweils mittels einer entsprechend angeordneten Rotationsvorrichtung drehbar ist/sind. Die unterschiedlichen Leitungsrohrelemente können durch die entsprechenden Rotationsvorrichtungen individuell an die Erfordernisse der Materialtransportaufgabe angepasst werden, ohne dass die Vorrichtung umgerüstet werden müsste.

Eine sehr variable Anordnung ist möglich, wenn mehrere drehbare Leitungsrohrelemente und nicht drehbare Leitungsrohrelemente vorgesehen sind, die insbesondere zwischen den drehbaren Leitungsrohrelementen angeordnet sind. Somit können Leitungsrohre für unterschiedlichste Anforderungen angefertigt werden, die die Eigenschaften von flexiblen und/oder starren sowie drehbaren und/oder nicht drehbaren Elementen vereinen.

Vorteilhaft ist es, wenn zusätzlich jeweils ein drehbares Leitungsrohrelement mit jeweils einer Rotationsvorrichtung in der Mitte und/oder am Ende des Leitungsrohrs vorgesehen ist.

Vorteilhaft ist es, wenn ein Lagerungselement, das insbesondere gegen einen Druck in Höhe des-Saugdrucks abgedichtet ist, zumindest an einem mit einem anderen Leitungsrohrelementen kontaktierten Endstück des drehbaren Leitungsrohrelements vorgesehen ist. Somit wird ein Druckabfall auch bei großen Leitungslängen des Leitungsrohrs vorne am Kopf verhindert.

Vorteilhaft ist es, wenn das Leitungsrohrelement fest und/oder flexibel ist und insbesondere Leitungsrohrelemente unterschiedlicher Eigenschaften aneinander zu lagern sind. Auf diese Weise können sehr lange Leitungsrohre auch für komplexe Wege mit Abbiegungen bzw. in zu reinigende Rohre hinein erhalten werden.

Vorteilhaft ist es, wenn die Rotationsvorrichtung je nach Bedarf einstellbar und/oder in der Geschwindigkeit und/oder Drehrichtung regelbar ist.

Vorteilhaft ist es, wenn ein drehbares Leitungsrohrelement an Bereichen mit häufigem Materialstau, beispielsweise bei großen Leitungslängen oder an Verwindungen" eingesetzt ist.

Vorteilhaft ist es, wenn das Leitungsrohr mit zumindest einem mittels einer Rotationsvorrichtung drehbaren Leitungsrohrelement mittels einer Lagerungs-und/oder Transportvorrichtung, insbesondere einer Neigevorrichtung und/oder einem Fahrzeug zu lagern und/oder zu transportieren ist.

Die Aufgabe wird ebenfalls gelöst durch einer Vorrichtung gemäß Anspruch 12.

Die Aufgabe wird ebenfalls gelöst durch einer Vorrichtung nach Anspruch 13.

Die Aufgabe wird ebenfalls gelöst durch einer Vorrichtung gemäß Anspruch 14.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind. Die Anführungen in den folgenden Ausführungsformen sind nicht einschränkend sondern lediglich beispielhaft zu verstehen.

Es zeigen:
- Fig. 1: einen Ausschnitt aus einer erfindungsgemäßen Vorrichtung,
- Fig. 2a: eine Rotationsvorrichtung_{.}
- Fig. 2b: eine Rotationsvorrichtung,
- Fig. 2c: einen Längsschnitt durch Rotationsvorrichtung,
- Fig. 2d: eine Rotationsvorrichtung in perspektivischer Ansicht,
- Fig. 2e: ein Detail aus Längsschnitt,
- Fig. 3: ein Beispiel einer erfindungsgemäßen Vorrichtung,
- Fig. 4a: ein Beispiel einer erfindungsgemäßen Vorrichtung,
- Fig. 4b: ein Beispiel einer erfindungsgemäßen Vorrichtung,
- Fig. 5: ein Beispiel einer erfindungsgemäßen Vorrichtung und
- Fig. 6: einen Ausschnitt aus einer erfindungsgemäßen Vorrichtung.

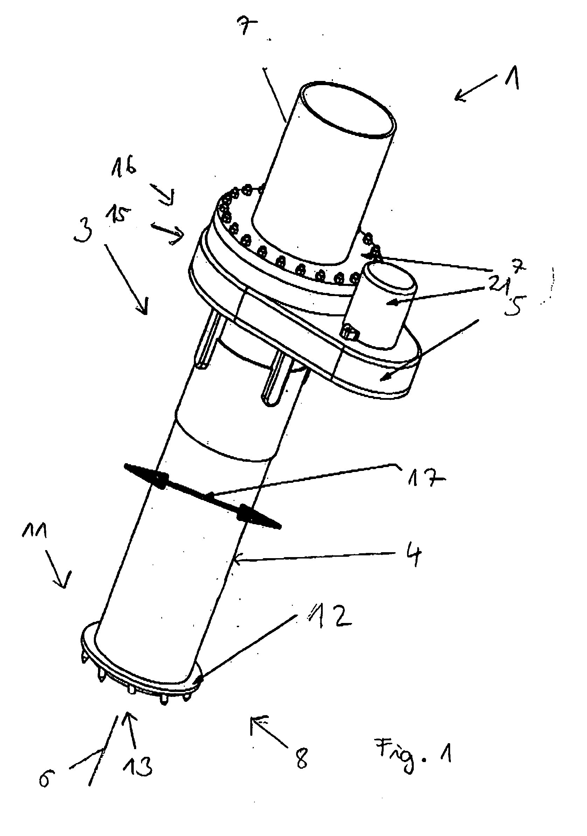

Fig. 1 zeigt einen Ausschnitt aus einer erfindungsgemäßen Vorrichtung zum Materialtransport 1 mit einem Leitungsrohr 3. Ein drehbares Leitungsrohrelement 4 und ein festes Leitungsrohrelement 7 sind mittels einer Rotationsvorrichtung 5 sowie von Lagerungen 15 an einem Endstück 16 verbunden. Diese Lagerung kann aus zwei Lagerringen bestehen, wobei einer der Ringe mit dem festen Leitungsrohrelement 7 verbunden ist und der zweite drehbar ist und daran das drehbare Leitungsrohrelement 4 befestigt ist, das beispielsweise ein flexibles Schlauchstück oder ein stabiles Stück sein kann. Die Drehung wird beispielsweise durch ein aufgesetztes Drehmoment, beispielsweise einen Motor mit Getriebe eingeleitet und durchgeführt. Das drehbare Leitungsrohrelement 4 hat eine Hilfseinrichtung 11 an einem Kopf 8 des Leitungsrohrs 3, beispielhaft einen Bohrkopf 12 mit einer Bohrkrone 13 und ist in zwei entgegengesetzten Drehrichtungen 17 um seine Längsachse 6 drehbar.

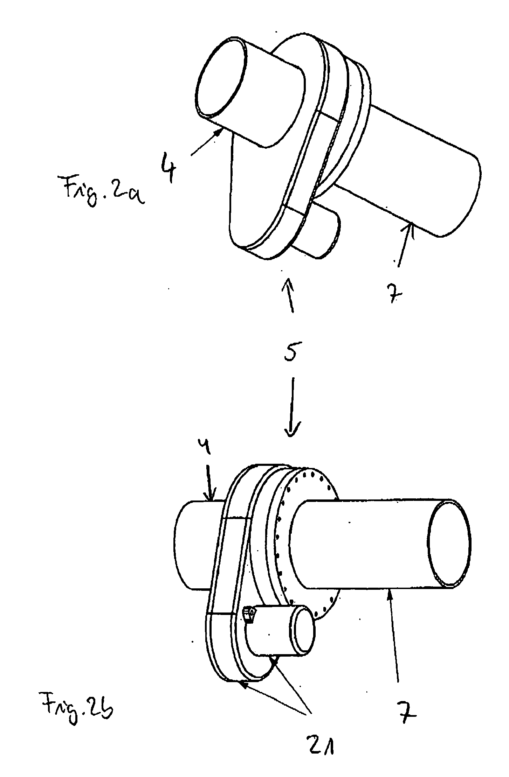

Fig. 2a, 2b zeigen eine Rotationsvorrichtung 5, die ein Leitungsrohrelement 4 drehen kann. Zwischen den beiden Leitungsrohrelementen 4, 7 befindet sich für die Drehbewegung eine Antriebseinheit 21.

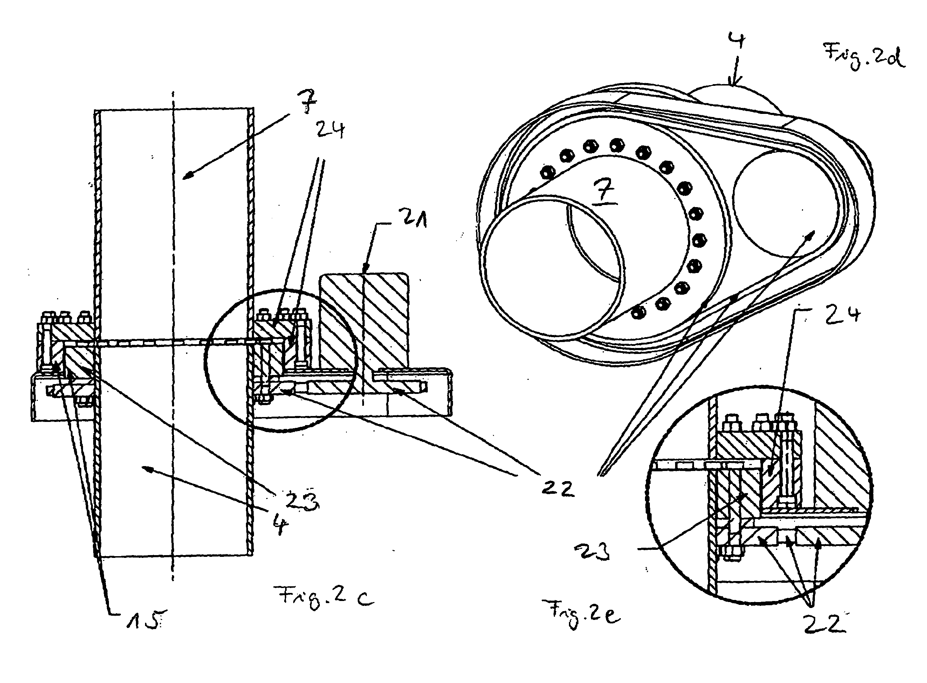

Fig. 2c zeigt einen Längsschnitt durch eine Vorrichtung zum Materialtransport 1 mit einer Rotationsvorrichtung 5 mit einer Antriebseinheit 21. Die Antriebseinheit 21 ist beispielhaft fest mit einem feststehenden Leitungsrohrelement 7 verbunden. Ein durch die Antriebseinheit und das Getriebe 22 angetriebenes Leitungsrohrelement 4 ist gegenüber dem feststehenden Leitungsrohrelement mittel einer Lagerung 15 drehbar gelagert. Durch einen Antriebsmotor des Antriebs 21 ist eine Drehung mit unterschiedlichen Geschwindigkeiten und unterschiedlichen Richtungen einfach möglich. Das sich drehende Leitungsrohrelement 4 ist im Beispielfall mit, einem Innenlager verbunden und wird über das Getriebe 22 der Antriebseinheit 21 angetrieben während die äußere Lagerung relativ dazu fest steht. Die drehende Lagerung 23 steht somit beispielhaft der stehenden Lagerung 24 gegenüber.

Fig. 2d zeigt eine. Rotationsvorrichtung 5 in perspektivischer Ansicht. Ein Leitungsrohrelement 7 weist eine damit verbundene Antriebseinheit 21 und das Getriebe 22 auf, wie in Fig. 2c als Längsschnitt dargestellt.

Fig. 2e zeigt ein Detail aus Längsschnitt, der vergrößert beispielhaft die sich drehende Lagerung 23 und die gegenüberstehende stehende Lagerung 24 sowie Ausschnitte des Getriebes 22 zeigt.

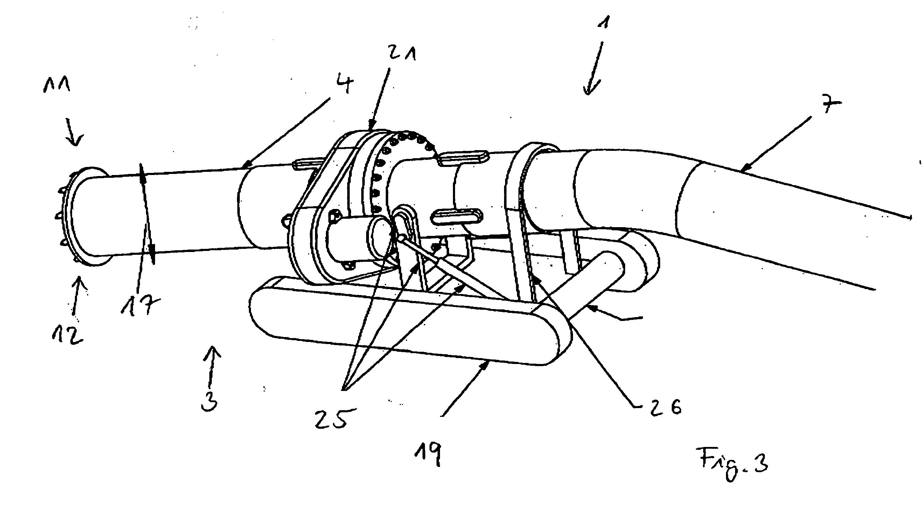

Fig. 3 zeigt ein Beispiel einer erfindungsgemäßen Vorrichtung zum Materialtransport 1. Die Rotationsvorrichtung mit der Antriebseinheit 21 sind beispielhaft auf einem Fahrzeug 19 gelagert und transportiert durch das auch die Energieversorgung, beispielsweise Hydraulikversorgung und/oder Stromversorgung, an die Rotationsvorrichtung gebracht werden kann. Auf dem Trägerfahrzeug 19, das beispielhaft einen eigenen Antrieb aufweist, kann sich zudem eine Neigeeinheit 25 befinden, durch die das Leitungsrohr 3 und insbesondere das drehbare Leitungsrohrelement 4 in die gewünschten Positionen gebracht werden kann. Zudem kann sich auf dem Fahrzeug 19 ein Sicherheitsbügel 26 befinden, durch den das Leitungsrohr 3 insbesondere i seinem flexiblen Bereich zusätzlich gehalten wird. Das Leitungsrohr 3 kann wie beispielhaft dargestellt auch auf ein Fahrgestell, insbesondere ketten- und radgetrieben, montiert werden, beispielsweise um schlecht zugängliche Stellen zu erreichen, beispielsweise für den Einsatz in Räumen, Kellertieferlegungen, zur Estrichabsaugung, in Straßenunterführungen etc.

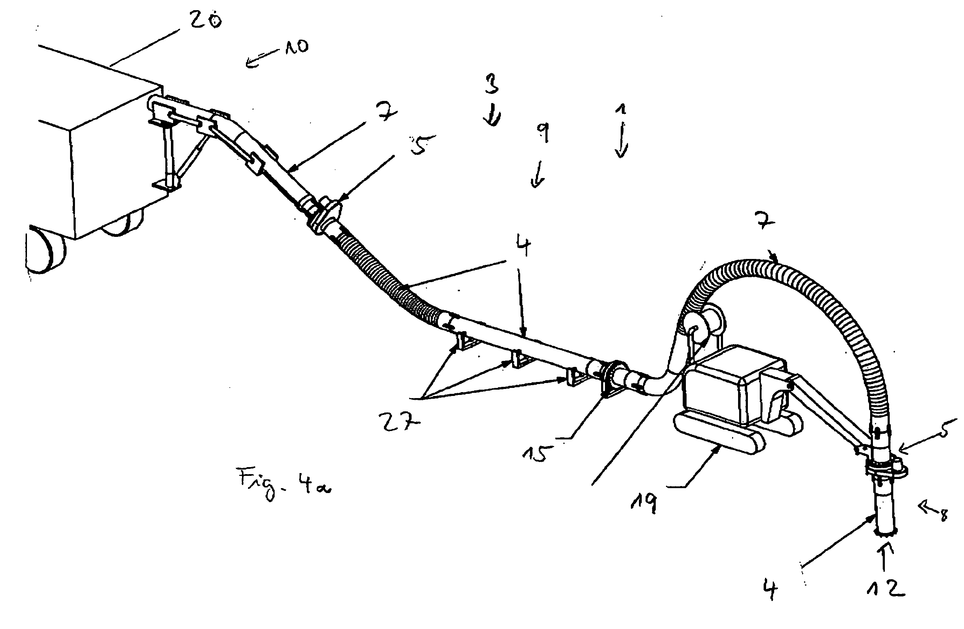

Fig. 4a zeigt ein Beispiel einer erfindungsgemäßen Vorrichtung zum Materialtransport 1. Ein an einen bewegbaren Materialsammelbehälter 20 angekoppelter, beispielhaft nicht drehender Saugschlauch als Leitungsrohrelement 7 wird an seinem Ende von einer Rotationsvorrichtung 5 begrenzt an die ein drehbares Leitungsrohrelement 4 in flexibler Form angeschlossen ist. Daran schließt sich in feste kupplung ein festes, jedoch mitdrehbares Leitungsrohrelement 4 an (kann in einer anderen Ausführungsform natürlich auch flexibel sein), das zudem beispielhaft auf einer Führung 27 aus Lagerungsstützen mit einem Abstand zum Boden beweglich gehalten ist. Anschließend findet sich am Ende der drehbaren Leitungsrohrelement 4 ein mitdrehbares Lagerungselement 15. Beispielhaft kann dieses auch ohne Antriebselement ausgebildet sein, da der Antrieb zur Drehung bereits durch die erstere Rotationsvorrichtung 5 in Materialsammelbehälternähe erzeugt wird oder es kann unter Regelung gleichgeschaltet mit der ersten Antriebseinheit drehend ausgebildet sein, falls es sich um schwere zu drehende Leitungsrohelemente 4 handelt. Anschließend sind mehrere fest verbundene, nicht drehende Leitungsrohrelemente 7 gezeigt, die auf einem Fahrzeug 19 in Form eines Baggers gelagert sind. Daran schließt sich wiederum eine kopfseitige Rotationsvorrichtung 5 an. Diese treibt ein Leitungsrohrelement mit einem Bohrkopf 12 an, durch den ein Auflockern und erster Aufsaugvorgang von Material erleichtert wird. Das Beispiel zeigt einen insgesamt komplexen Rohrleitungsaufbau, der durch Anwendung der erfindungsgemäßen Vorrichtung trotzdem nicht durch Verstopfungen oder Materialverschlüsse oder nicht transportierbares Material behindert wird. Durch die einfache Anordnung von drehbaren Leitungsrohrelementen 4 beispielhaft an Kopf 8, Mitte 9 oder Ende 10 sind verschiedenste Aufgabenstellungen zu bewältigen.

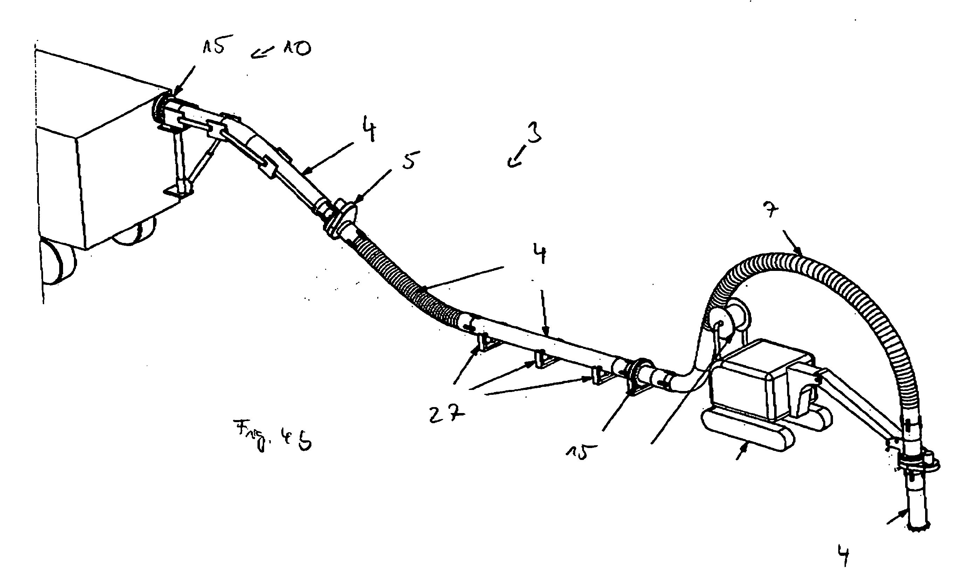

Fig. 4b zeigt ein weiteres Beispiel einer erfindungsgemäßen Vorrichtung. In diesem Fall ist auch das Leitungsrohrelement 4 am Ende 10 des Leitungsrohrs 3 drehbar, wobei in diesem Ausführungsbeispiel die mittleren und die endseitigen Leitungsrohrelemente 4 fest verbunden sind und von einer mittig angebrachten Rotationsvorrichtung 5 angetrieben werden.

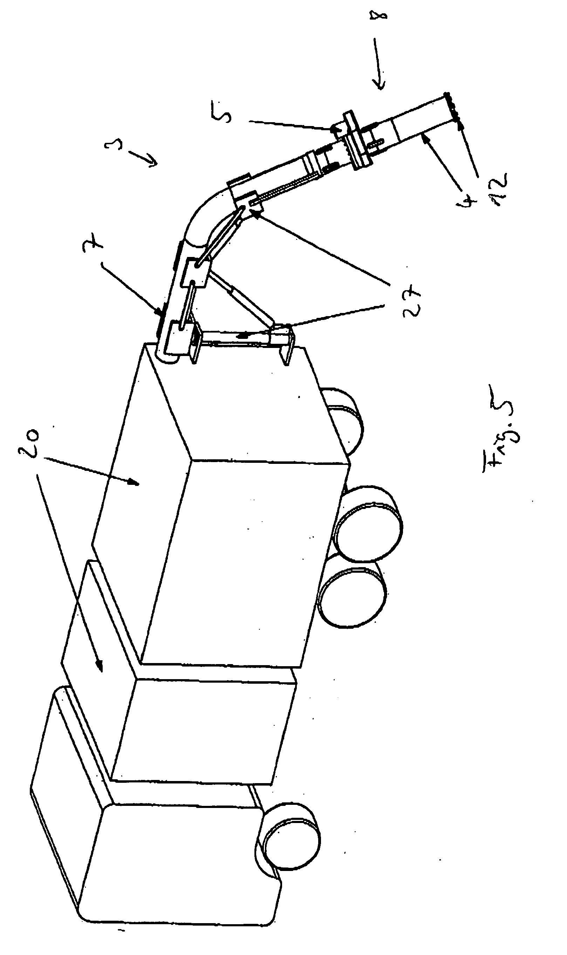

Fig. 5 zeigt ein Beispiel einer erfindungsgemäßen Vorrichtung zum Materialtransport 1 mit einem Fahrzeug mit Materialsammelbehältern 20. Eine beispielhafte Führung 27 mit einer Neigevorrichtung hält ein Leitungsrohr 3, an dessen Kopf 8 ein drehbares Leitungsrohrelement 4 angebracht ist, mit einer Bohrkrone 13 am Bohrkopf 12.

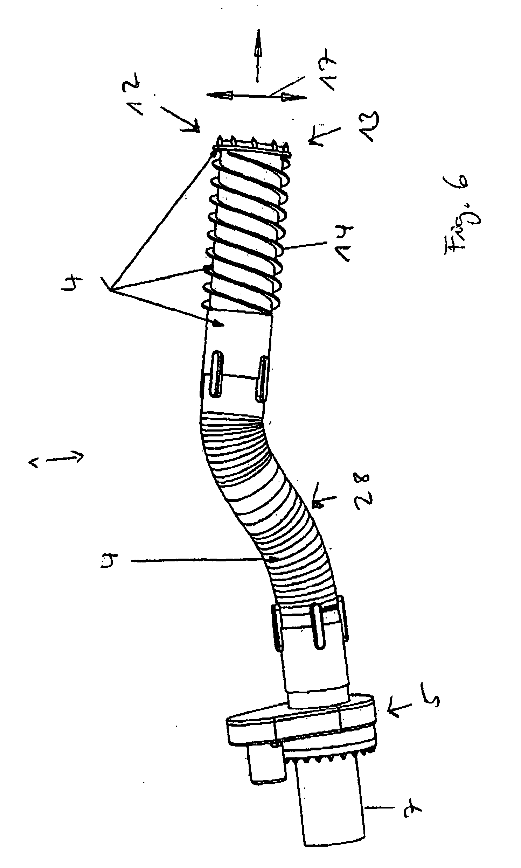

Fig. 6 zeigt einen Ausschnitt aus einer erfndungsgemäßen Vorrichtung 1 mit einem flexiblen Verlängerungeschlauchleitung 28 als drehbarem Leitungsrohrelement 4 sowie einer sich daran fest anschließenden Bohrkopf 12 mit einer Schraublamelle 14 und einer Bohrkrone 13 insbesondere zum verbesserten und sicheren Führen des drehenden Leitungselements im Boden oder zum Erreichen von schwer zugänglichen Bereichen. Mit Hilfe der zusätzlichen Schraublamellen 14 kann sich nun das Rohrelement, wenn es in Drehung versetzt wird, nach vorne in das Material hineinschrauben, beispielsweise zur Säuberung in Wasserrohren.

### BEZUGSZEICHENLISTE

- 1: Vorrichtung zum Materialtransport
- 3: Leitungsrohr
- 4: Leitungsrohrelement
- 5: Rotationsvorrichtung
- 6: Längsachse
- 7: Leitungsrohrelement
- 8: Kopf
- 9: Mitte
- 10: Ende
- 11: Hilfseinrichtung
- 12: Bohrkopf
- 13: Bohrkrone
- 14: Schraublamellen
- 15: Lagerungselement
- 16: Endstück
- 17: Drehrichtung
- 18: Bereich
- 19: Fahrzeug
- 20: Materialsammelbehälter
- 21: Antriebseinheit
- 22: Getriebe
- 23: drehende Lagerung
- 24: stehende Lagerung
- 25: Neigeeinheit
- 26: Stcherheitsbügel
- 27: Führung
- 28: Verlängerungsleitung

## Patentansprüche

1. Vorrichtung zum Materialtransport (1)
- mit zumindest einem Leitungsrohr (3) und
- mit zumindest einem Leitungsrohrelement (4), durch das der Materialtransport vorzunehmen ist, und
- mit zumindest einer Rotationsvorrichtung (5), die mit dem Leitungsrohrelement (4) so verbunden ist, dass das Leitungsrohrelement (4) mit Hilfe der Rotationsvorrichtung (5) um eine Längsachse (6) drehbar ist und
- ein drehbares Leitungsrohrelement (4) am Kopf eines Leitungsrohres (3) einen Bohrkopf (12) aufweist,
**dadurch gekennzeichnet, dass**.
- eine Sauglufteinheit vorhanden ist A1 alt und
- in den Leitungsrohren (3) und Leitungsrohrelementen (4) ein Luftstrom mit einem Saugdruck erzeugbar ist und
- durch den Bohrkopf (12) ein Auflockern und ein erster Aufsaugvorgang von Erdreich oder verhärtetem Erdreich oder Sand erleichterbar ist.

2. Vorrichtung nach Anspruch 1, **dadurch gekennzeichnet, dass** mehrere Leitungsrohrelemente vorhanden sind, wobei eines oder mehrere der Leitungsrohrelemente (4) mittels jeweils einer entsprechend angeordneten Rotationsvorrichtung (5) drehbar ist/sind.

3. Vorrichtung nach einem der Ansprüche 1 oder 2, **dadurch gekennzeichnet, dass** mehrere drehbare Leitungsrohrelemente (4) und nicht drehbare Leitungsrohrelement/en (7) vorgesehen sind, die insbesondere zwischen den drehbaren Leitungsrohrelementen (4) angeordnet sind.

4. Vorrichtung nach einem oder mehreren der Ansprüche 1 bis 3, **dadurch gekennzeichnet, dass** jeweils ein drehbares Leitungsrohrelement (4) mit jeweils einer Rotationsvorrichtung (5) am Anfang (8) und/oder in der Mitte (9) und/oder am Ende (9) des Leitungsrohrs (3) vorgesehen ist.

5. Vorrichtung nach einem oder mehreren der Ansprüche 1 bis 4, **dadurch gekennzeichnet, dass** ein drehbares Leitungsrohrelement (4) am Anfang (8) des Leitungsrohrs (3) eine Hilfseinrichtung (11) aufweist, mit deren Hilfe insbesondere der Materialtransport und/oder ein Bohrvorgang unterstützt wird.

6. Vorrichtung nach einem oder mehreren der Ansprüche 1 bis 5, **dadurch gekennzeichnet, dass** der Bohrkopf (12) eine Bohrkrone (13) aufweist, insbesondere einen Diamantbohrer und/oder Krallen, und/oder mit Schraublamellen (14) im Sinne eines schraubenartig umlautenden Außenstegs ausgestattet ist.

7. Vorrichtung nach einem oder mehreren der Ansprüche 1 bis 6, **dadurch gekennzeichnet, dass** ein Lagerungselement (15), das insbesondere gegen einen Druck in Höhe des Saugdrucks abgedichtet ist, zumindest an einem mit einem anderen Leitungsrohrelementen kontaktierten Endstück (16) des drehbaren Leitungsrohrelements (4) vorgesehen ist.

8. Vorrichtung nach einem oder mehreren der Ansprüche 1 bis 7, **dadurch gekennzeichnet, dass** das Leitungsrohrelement (4) fest und/oder flexibel ist und insbesondere Leitungsrohrelemente unterschiedlicher Eigenschaften aneinander zu lagern sind.

9. Vorrichtung nach einem oder mehreren der Ansprüche 1 bis 8, **dadurch gekennzeichnet, dass** die Rotationsvorrichtung (5) je nach Bedarf einstellbar und/oder in der Geschwindigkeit und/oder Drehrichtung (17) regelbar ist.

10. Vorrichtung nach einem oder mehreren der Ansprüche 1 bis 9, **dadurch gekennzeichnet, dass** ein drehbares Leitungsrohrelement (4) an Bereichen (18) mit häufigem Materialstau, beispielsweise bei großen Leitungslängen oder an Verwindungen, eingesetzt ist.

11. Vorrichtung nach einem oder mehreren der Ansprüche 1 bis 10, **dadurch gekennzeichnet, dass** das Leitungsrohr mit zumindest einem mittels einer Rotationsvorrichtung drehbaren Leitungsrohrelement mittels einer Lagerungs- und/oder Transportvorrichtung, insbesondere einer Neigevorrichtung und/oder einem Fahrzeug zu lagern und/oder zu transportieren ist.

12. Vorrichtung nach einem der Ansprüche 1 bis 11, **dadurch gekennzeichnet, dass** sie auf einem Fahrzeug (19) *montiert* ist, das mit einem Materialsammelbehälter (20) ausgerüstet ist.

13. Vorrichtung nach einem der Ansprüche 1 bis 11, **dadurch gekennzeichnet, dass** *sie* zur Reinigung, insbesondere von unzugänglichen Bereichen und insbesondere auch von Rohren mit insbesondere flüssigen Medien verwendbar ist.

14. Vorrichtung nach einem der Ansprüche 1 bis 12, **dadurch gekennzeichnet, dass** mittels eines Saugdrucks ein Materialtransport durch ein Leitungsrohr (3) bewirkt wird, wobei zumindest ein Teil des Leitungsrohrs (3) mittels eines drehbaren Leitungsrohrelements (4) drehbar ist, so dass insbesondere eine Materialansammlung verhindert wird.

## Claims

1. Device for material transport (1)
- comprising at least one duct tube (3) and
- comprising at least one duct tube element (4), through which the material transport is to be performed, and
- comprising at least one rotation device (5), which is connected to the duct tube element (4) such that the duct tube element (4) is rotatable about a longitudinal axis (6) with the aid of the rotation device (5) and
- one rotatable duct tube element (4) at the head of a duct tube (3) comprises a drill head (12),
**characterised in that**
- an air suction unit is present, and
- an air stream with a suction pressure can be generated in the duct tubes (3) and duct tube elements (4) and
- a loosening and a first suction process of earth or hardened earth or sand is facilitated by means of the drill head (12).

2. Device according to claim 1, **characterised in that** a plurality of duct tube elements are present, one or more of the duct tube elements (4) being rotatable by means of an appropriately disposed rotation device (5).

3. Device according to one of claims 1 or 2, **characterised in that** a plurality of rotatable duct tube elements (4) and non-rotatable duct tube element(s) (7) are provided, which are disposed in particular between the rotatable duct tube elements (4).

4. Method according to one or more of claims 1 to 3, **characterised in that** a rotatable duct tube element (4) in each case, having one rotation device (5) at the beginning (8) and/or in the centre (9) and/or at the end (9) of the duct tube (3), is provided.

5. Method according to one or more of claims 1 to 4, **characterised in that** a rotatable duct tube element (4) has, at the beginning (8) of the duct tube (3), an auxiliary device (11), with the aid of which in particular the material transport and/or a drilling operation is assisted.

6. Method according to one or more of claims 1 to 5, **characterised in that** the drill head (12) has a drill crown (13), in particular a diamond borer and/or claws, and/or is equipped with screw lamellae (14) in the sense of a helically surrounding outer land.

7. Device according to one or more of claims 1 to 6, **characterised in that** a bearing element (15), which is in particular sealed against a pressure of the order of the suction pressure, is provided at least on one end portion (16), which is contacted by another duct tube element, of the rotatable duct tube element (4).

8. Device according to one or more of claims 1 or 7, **characterised in that** the duct tube element (4) is fixed and/or flexible and in particular duct tube elements with different properties are to be mounted on one another.

9. Method according to one of claims 1 to 8, **characterised in that** the rotation device (5) is adjustable as required and/or controllable as regards velocity and/or rotational direction (17).

10. Device according to one or more of claims 1 to 9, **characterised in that** a rotatable duct tube element (4) is used at regions (18) of frequent material build-up, for example in the case of large duct lengths, or at torsions.

11. Device according to one or more of claims 1 to 10, **characterised in that** the duct tube, with at least one duct tube element, which is rotatable by means of a rotation device, is to be mounted and/or transported by means of a mounting and/or transportation device, in particular an inclination device and/or a vehicle.

12. Device according to one of claims 1 to 11, **characterised in that** it is mounted on a vehicle (19), which is equipped with a material collection container (20).

13. Device according to one of claims 1 to 11, **characterised in that** it can be used for cleaning in particular inaccessible regions and in particular pipes with in particular liquid media.

14. Device according to one of claims 1 to 12, **characterised in that** material transport through a duct tube (3) is effected by means of a suction pressure, at least a portion of the duct tube (3) being rotatable by means of a rotatable duct tube element (4), so that in particular a material accumulation is prevented.

## Revendications

1. Dispositif destiné au transport de matériel (1)
• avec au moins un conduit (3) et
• avec au moins un élément de conduit (4) au moyen duquel le transport de matériel doit être exécuté, et
• avec au moins un dispositif de rotation (5), qui est relié avec l'élément de conduit (4) de manière à ce que l'élément de conduit (4) puisse être tourné autour de l'axe longitudinal (6) par le dispositif de rotation
• un élément de conduit (4) rotatif sur la tête d'un conduit (4) présentant une tête de forage (12)
**caractérisé par le fait**
• **qu'**il y a une unité d'air d'aspiration
et
• **qu'**un courant d'air peut être généré avec une pression d'aspiration dans les conduits (3) et les éléments de conduit (4)
• **qu'**on peut faciliter l'ameublissement et une première opération d'aspiration de terre ou de terre durcie ou de sable par la tête de forage (12).

2. Dispositif selon la revendication 1, **caractérisé par le fait qu'**il y a plusieurs éléments de conduit, sachant qu'un un ou plusieurs des éléments de conduit (4) peuvent être chacun tourné à l'aide d'un dispositif de rotation (5) disposé en conséquence.

3. Dispositif selon une des revendications 1 ou 2, **caractérisé par le fait que** plusieurs éléments de conduit rotatifs (4) et d'éléments de conduit non rotatifs (7), qui sont particulièrement disposés entre les éléments de conduit rotatifs (4).

4. Dispositif selon un ou plusieurs des revendications 1 à 3, **caractérisé par le fait qu'**à chaque fois un élément de conduit rotatif (4) ayant chacun un dispositif de rotation (5) est prévu au début (8) et/ou au milieu (9) et/ou à l'extrémité (9) du conduit (3).

5. Dispositif selon une ou plusieurs des revendications 1 à 4, **caractérisé par le fait qu'**un élément de conduit rotatif (4) présente au début (8) du conduit (3) un dispositif auxiliaire (11 ) qui soutient notamment le transport de matériel et/ou une opération de forage.

6. Dispositif une ou plusieurs des revendications 1 à 5, **caractérisé par le fait que** la tête de forage (12) présente une couronne de forage (13), est notamment équipée d'un foret diamant et/ou de griffes avec des lamelles de vissage (14) au sens d'une traverse extérieure de type vis.

7. Dispositif selon une ou plusieurs des revendications 1 à 6, **caractérisé par le fait qu'**un élément de suspension (15), qui est notamment étanchéifié contre une pression à hauteur de la pression d'aspiration, est au moins prévu sur une pièce d'extrémité (16) de l'élément de conduit rotatif (4) en contact avec un autre élément de conduit.

8. Dispositif selon une ou plusieurs des revendications 1 à 7, **caractérisé par le fait que** l'élément de conduit (4) est rigide et/ou souple et que notamment les éléments de conduit ayant des propriétés variées doivent être entreposées.

9. Dispositif selon une ou plusieurs des revendications 1 à 8, **caractérisé par le fait que** le dispositif de rotatif (5) peut être, selon les besoins, réglé et/ou régulé au niveau de la vitesse et/ou du sens de rotation (17).

10. Dispositif selon une ou plusieurs des revendications 1 à 8, **caractérisé par le fait qu'**un élément de conduit rotatif (4) est utilisé dans des domaines (18) où il y a fréquemment des embouteillages de matériel, par exemple dans le cas de grandes longueurs de conduit ou sur des torsions.

11. Dispositif selon une ou plusieurs des revendications 1 à 10, **caractérisé par le fait que** le conduit avec au moins un élément de conduit pouvant être tourné au moyen d'un dispositif de rotation doit être stocké et/ou transporté au moyen d'un dispositif de stockage et/ou de transport, notamment d'un dispositif d'inclinaison et/ou d'un véhicule.

12. Dispositif selon une ou plusieurs des revendications 1 à 11, **caractérisé par** le fait d'être monté sur un véhicule qui est équipé d'un récipient de collecte des matériels (20).

13. Dispositif selon une ou plusieurs des revendications 1 à 11, **caractérisé par** le fait de pouvoir être utilisé pour le nettoyage, notamment de zones accessibles et notamment aussi de tuyaux avec notamment des fluides.

14. Dispositif selon une ou plusieurs des revendications 1 à 12, **caractérisé par le fait qu'**un transport de matériel est obtenu, au moyen d'une pression d'aspiration, à travers un conduit (3), sachant qu'au moins une partie du conduit (3) peut être tourné au moyen d'un élément de conduit rotatif (4), de façon notamment à éviter un accumulation de matériel.
